# EUROPEAN PATENT APPLICATION

(11) **EP 1 431 364 A1**
(43) Date of publication of application: **23.06.2004**
(21) Application number: 02028464.2
(22) Date of filing: 19.12.2002
(51) Int. Cl.: C09J 153/02, C08L 53/02, C08F 297/04, C09J 7/02

(54) **Packaging tape adhesive composition and packaging tape comprising it**

(71) Applicant: KRATON Polymers Research B.V., 1031 CM Amsterdam (NL)
(72) Inventor: Van de Vliet, Birgit M L C, 1348 Ottignies-LLN (BE); Vermunichts, Geert E A, 1348 Ottignies-LLN (BE); Leffelaar, Karel H, 1348 Ottignies-LLN (BE)
(74) Representative: Kortekaas, Marcellinus C. J. A.

(57) **Abstract**

A packaging tape adhesive composition for cardboard box sealing tapes, comprising:
- a linear tetrablock copolymer S-I-S-I', obtainable by full sequential polymerization of predominantly styrene and of predominantly isoprene respectively, having an apparent molecular weight in the range of from 205,000 to 225,000, and wherein both predominantly poly(styrene) blocks have an apparent molecular weight of from 10,000 to 12,000, wherein the intermediate S-I diblock copolymer has an apparent molecular weight in the range of from 130,000 to 185,000, wherein the intermediate S-I-S triblock copolymer has an apparent molecular weight in the range of from 145,000 to 195,000, wherein the poly(styrene) content is in the range of from 14 to 16 wt%,
- at least one tackifying resin in an amount of from 50 to 150 parts by weight per 100 parts by weight of block copolymers.

## Description

### Field of the invention

The present invention relates to a packaging tape adhesive composition and to a packaging tape comprising it. More in particular, the present invention relates to an adhesive composition for the manufacture of packaging tapes for cardboard box sealing, which must exhibit a relatively high value of shear strength. It will be appreciated that moreover such a tape simultaneously has to be relatively soft and be economically feasible, i.e. it must be produced at a cost price as low as possible. In said tapes the adhesive composition is applied on a flexible substrate, such as a thin substrate of a polyolefin, polyamide or a polyester.

### Background of the invention

Varying efforts were made during the last decades to provide block copolymers for improved adhesive compositions for packaging tapes.

From US patent No. 3,753,936 (A-B)ₓY type polymers were known, wherein A represents non- elastomeric polymer blocks, or segments and B represents elastomeric polymer segments, Y is an atom or group of atoms derived from a poly-functional treating agent used in the formation of the radial polymers, and x is an integer of at least 3 and can be equal to the number of functional groups of said poly-functional treating agent. The radial block polymer thus can be characterized as having at least three polymer branches with each branch of the radial block polymer comprising terminal non-elastomeric segments. The branches of the radial block polymer contain a terminal non-elastomeric segment attached to an elastomeric polymer segment.

US patent No. 3,935,338 disclosed block copolymers having at least two monoalkenyl arene polymer blocks and at least ine elastomeric conjugated diene polymer block. The macromolecular configuration could be either linear or radial dependent upon the method by which the block copolymer was formed. Typical block copolymers of the most simple configuration would have the structure polystyrene-polyisoprene-polystyrene, and polystyrene-polybutadiene-polystyrene. The adhesive composition of US patent No. 3,935,338 called for 25 to 100 parts by weight extending oil per hundred parts by weight rubber. The addition of even a moderate amount of oil was taught to drastically reduce the peel adhesion and the shear adhesion failure temperature, thus indicating that such compositions would be unsatisfactory in many adhesive applications even though the addition of oil did in fact substantially reduce the viscosities of the hot-melts derived there-from.

US patent No. 3,954,692 disclosed a mixture of (a) an unvulcanized elastomeric block copolymer having the general configuration A-B-A wherein each A is an independently selected non-elastomeric monovinyl aromatic hydrocarbon polymer block having an average molecular weight of 2,000 to 100,000, the total block A content being from about 10 to about 50% by weight of the copolymer, and B is an elastomeric conjugated diene polymer block having an average molecular weight from about 25,000 to about 1,000,000, and (b) a compatible, thermoplastic tackifying resin containing carbon-carbon unsaturation therein and derived from hydrocarbons having from 5 to 8 carbon atoms and at least one carbon-to-carbon double bond therein selected from aliphatic hydrocarbons and alicyclic hydrocarbons.

US patent No. 5,183,705 disclosed tacky pressure sensitive adhesive compositions comprising (1) a radical teleblock copolymer having at least three monoalkenylarene polymer blocks and a branched elastomeric conjugated diene polymer block; (2) a tackyfying resin; and (3) from about 5 to about 20 parts by weight extending oil per hundred parts by weight of radial polymer.

The radial teleblock copolymer was said to be preferably of the formula (AB)n-Z, wherein n represents an integer equal to or greater than 3 and Z represents a multifunctional linking agent.

Said pressure sensitive adhesive compositions were indicated to provide an improved adhesive for hot-melt coating of pressure sensitive tapes suitable for sealing containers.

The monoalkenylarene polymer blocks of said block copolymers comprise from about 17 to 23% by weight of said block copolymer and the molecular weight of said block copolymer ranged from about 180,000 to 250,000; n should preferably represent the integer 3 or 4.

From US patent No. 5,194,500 adhesive compositions were known, which contained a tackifying resin and a branched three-armed S-I-S block copolymer composition, wherein S represented a poly(alkenyl-aromatic hydrocarbon) block and wherein I was a poly(isoprene) block. Said branched block copolymer showed a molecular weight (as polystyrene equivalent) from 180,000 to 250,000, a polystyrene content from 17 to 23 wt% of the block copolymer composition and a percentage of S-I arms, which are load bearing, by weight of the block copolymer composition is greater than 85%. These adhesive compositions were indicated to have an acceptable holding in a shear test.

Possible effects of diblocks present on pressure sensitive adhesive properties were described in PSTC Tech XIV, Technical Seminar Proceedings May 1991, page 119-137, by S.H. Dillman. However the effect of diblocks in pressure sensitive adhesive compositions was found to be a complex function of both formulation and other variables which could be classified into two groups; compositional variables and architectural variables.

Compositional variables included the monomers used an their relative fractions and architectural variables dealt with how the monomers were put together into a molecule. As a general rule there was expressed that in most adhesive formulations increased levels of diblock generally will produce higher 180° peel strength and lower melt viscosities, but lower SAFTS (temperature resistance measured by a lap shear bond to Mylar or Kraft paper) and lower Rolling Ball Tack. It was concluded that the effect of diblock on holding powers was complex and that increasing levels of diblock can either increase or decrease holding powers depending on formulation as well as other molecular characteristics. In particular the suitability of packaging tapes for sealing cardboard boxes can be tested according to the so-called Flap test method, as disclosed in C.P.L.C. Donker, European Adhesives and Sealants, December 1991, pages 21-24. Said disclosed Flap test is a combination of peel adhesion and shear adhesion.

It will be appreciated that in particular for sealing of cardboard boxes there has been developed a need for packaging tapes, which show a well balanced improved combination of relevant physical properties, i.e. holding power to Kraft, holding power in Flap tests to Kraft, Rolling Ball Tack (RBT) and hot melt viscosity at 190°C (HMV). Therefore an object of the present invention is to provide improved pressure sensitive adhesive compositions for packaging tapes for cardboard boxes, and to provide improved block copolymers to be used in them. As result of extensive research and experimentation, said block copolymers and adhesive compositions aimed at have now been found

### Summary of the invention

According to a first aspect, the present invention relates to a packaging tape adhesive composition for cardboard box sealing tapes, comprising:
- a linear tetrablock copolymer S-I-S-I', obtainable by full sequential polymerization of predominantly styrene and of predominantly isoprene respectively, having an apparent molecular weight in the range of from 205,000 to 225,000 and preferably from 210,000 to 217,000, and wherein both predominantly poly(styrene) blocks have an apparent molecular weight of from 10,000 to 12,000 and preferably from 10,000 to 11,800, wherein the intermediate S-I diblock copolymer has an apparent molecular weight in the range of from 130,000 to 185,000, and preferably from 135,000 to 184,000; wherein the intermediate S-I-S triblock copolymer has an apparent molecular weight in the range of from 145,000 to 195,000 and preferably from 147,000 to 193,000, wherein the poly(styrene) content is in the range of from 14 to 16 wt%,
- at least one tackifying resin in an amount of from 50 to 150 parts by weight, and preferably between 90 and 120 parts by weight per 100 parts by weight of block copolymers,
- optionally a naphtenic oil or paraffinic oil in an amount of from 0 to 50 parts by weight and preferably from 5 to 20 parts by weight per 100 parts by weight of block copolymers, and
- optionally an antioxidant and/or other auxiliaries, in an amount from 0.1 to 10 parts by weight and preferably from 0.5 to 5 parts by weight per 100 parts by weight of block copolymer.

Another aspect of the present invention is formed by linear tetrablock copolymers S-I-S-I' for the manufacture of packaging tape adhesive compositions for cardboard box sealing, obtainable by full sequential polymerization of predominantly styrene and of predominantly isoprene respectively, having an apparent molecular weight in the range of from 205,000 to 225,00 and preferably from 210,000 to 217,000, and wherein both predominantly poly(styrene) blocks have an apparent molecular weight of from 10,000 to 12,000 and preferably from 10.000 to 11,800, wherein the intermediate S-I diblock copolymer has an apparent molecular weight in the range of from 130,000 to 185,000, and preferably from 135,000 to 184,000; wherein the intermediate S-I-S triblock copolymer has an apparent molecular weight in the range of from 145,000 to 195,000 and preferably from 147,000 to 193,000, wherein the poly(styrene) content is in the range of from 14 to 16 wt%.

Another aspect of the present invention is formed by a process for the manufacture of pellets comprising an adhesive composition for packaging tapes for sealing cardboard boxes comprising:
a) adding
   i. a linear tetrablock copolymer obtainable by full sequential polymerization of predominantly styrene and predominantly isoprene respectively, having an apparent molecular weight in the range of from 205,000 to 225,000 and preferably from 210,000 to 217,000, and wherein both predominantly poly(styrene) blocks have an apparent molecular weight of from 10,000 to 12,000 and preferably from 10.000 to 11,800, wherein the intermediate S-I diblock copolymer has an apparent molecular weight in the range of from 130,000 to 185,000, and preferably from 135,000 to 184,000; wherein the intermediate S-I-S triblock copolymer has an apparent molecular weight in the range of from 145,000 to 195,000 and preferably from 147,000 to 193,000, wherein the poly(styrene) content is in the range of from 14 to 16 wt%,
   ii. at least one tackifying resin in an amount of from 50 to 150 parts by weight and preferably from 90 to 120 parts by weight per 100 parts by weight of block copolymers,
   iii. optionally a naphtenic oil or paraffinic oil in an amount of from 0 to 50 parts by weight and preferably from 5 to 20 parts by weight per 100 parts by weight of block copolymers,
   iv. optionally an antioxidant and/or other auxiliaries, in an amount from 0.1 to 10 parts by weight and preferably from 0.5 to 5 parts by weight per 100 parts by weight of block copolymers, and
   v. optionally an antifoaming agent and/or a detergent in an amount of from 500 to 5000 ppm, relative to the weight of the composition,
   to an extruder,
b) blending and extruding the components in the extruder to obtain an extrudate,
c) pelletizing the extrudate with an underwater pelletizer to obtain wet pellets, and
d) drying the wet pellets to obtain pellets containing the adhesive composition and optionally treating the wet or dry pellets with a dusting agent in an amount of from 0.05 to 10% by weight of the total adhesive composition.

It will be appreciated that another aspect of the present invention is formed by packaging tapes for cardboard sealing comprising an adhesive composition as specified hereinbefore.

### Detailed description of the invention

With the terms "predominantly styrene" and "predominantly isoprene", as used throughout the present specification, is meant respectively that substantially pure homopolymer blocks or copolymer blocks derived from a major monomer, such as styrene or isoprene, i.e. at least 80 wt% and preferably more than 95 wt%, mixed with a minor amount of structurally related comonomers, e.g. methylstyrene in case of styrene as major monomer or butadiene in the case of isoprene as major monomer, or mixed with a minor amount of the other comonomer occurring in the final block copolymers (e.g. isoprene in styrene as major monomer or styrene in isoprene as major monomer). Most preferably the block copolymers to be used according to the present invention are composed of substantially pure poly(styrene) homopolymer blocks and substantially pure poly(isoprene) homopolymer blocks.

The more preferred S-I-S-I' tetrablock copolymers are those wherein S represents the same poly(styrene) blocks and I and I' represent poly(isoprene) blocks of the same or different molecular weight. More preferably the molecular weight of I is significantly greater than that one of I'.

The more preferred S-I-S-I' tetrablock copolymers have a styrene content of from 14.5 to 15.5 wt% and most preferably about 15.0 wt%.

The most preferred apparent molecular weight of the complete tetrablock copolymers is in the range of from 210,000 to 216,000.

The more preferred tetrablock copolymers comprise predominantly poly(isoprene) blocks I, having a molecular weight of from 124,000 to 175,000 and most preferably from 125,000 to 172,000, as calculated from the apparent molecular weights measured after the first and second consecutive polymerization steps.

The more preferred tetrablock copolymers comprise terminal predominantly poly(isoprene) blocks I', having a molecular weight of from 20,000 to 65,000 and most preferably from 22,000 to 64,000, as calculated from the apparent molecular weights measured after the consecutive third and fourth polymerization steps.

The tetrablock copolymers are obtainable by subsequent complete anionic polymerization of predominantly styrene monomer, predominantly isoprene monomer, substantially the same amount of predominantly styrene monomer and the same or different amount of predominantly isoprene monomer respectively, by means of an organolithium initiator and more preferably a butyl lithium, in an organic solvent such as cyclo-aliphatic or aromatic solvents or mixtures thereof, and preferably cyclopentane or cyclohexane. A more preferred initiator is sec-butyllithium.

Another preferred aspect of the present invention is formed by packaging tape adhesive compositions for cardboard box sealing tapes, comprising:
i. a linear tetrablock copolymer, obtainable by full sequential polymerization of substantially pure styrene and of substantially pure isoprene respectively, having an apparent molecular weight in the range of from 210,000 to 217,000, and wherein both substantially pure poly(styrene) blocks have an apparent molecular weight of from 10,000 to 10,800, wherein the intermediate S-I diblock copolymer has an apparent molecular weight in the range of from 135,000 to 184,000, wherein the intermediate S-I-S triblock copolymer has an apparent molecular weight in the range of from 147,000 to 193,000, wherein the poly(styrene) content is in the range of from 14 to 16 wt%,
ii. at least one tackifying resin in an amount of from 50 to 150 parts by weight and preferably from 90 to 120 parts by weight per 100 parts by weight of block copolymers,
iii. optionally a naphtenic oil or paraffinic oil in an amount of from 0 to 50 parts by weight and preferably from 5 to 20 parts by weight per 100 parts by weight of block copolymers, and
iv. optionally an antioxidant and/or other auxiliaries, in an amount from 0.1 to 10 parts by weight and preferably from 0.5 to 5 parts by weight per 100 parts by weight of block copolymers.

It will be appreciated that another preferred aspect of the present invention is formed by a process for the manufacture of pellets, containing an adhesive composition for packaging tapes for sealing of cardboard boxes, comprising
a) adding
   i.a linear tetrablock copolymer, obtainable by full sequential polymerization of substantially pure styrene and of substantially pure isoprene respectively, having an apparent molecular weight in the range of from 210,000 to 217,000, and wherein both substantially pure poly(styrene) blocks have an apparent molecular weight of from 10,000 to 10,800, wherein the intermediate S-I diblock copolymer has an apparent molecular weight in the range of from 135,000 to 184,000; wherein the intermediate S-I-S triblock copolymer has an apparent molecular weight in the range of from 147,000 to 193,000; wherein the poly(styrene) content is in the range of from 14 to 16 wt%,
   ii. at least one tackifying resin in an amount of from 50 to 150 parts by weight and preferably from 90 to 120 parts by weight per 100 parts by weight of block copolymers,
   iii. optionally a naphtenic oil or paraffinic oil in an amount of from 0 to 50 parts by weight and preferably from 5 to 20 parts by weight per 100 parts by weight of block copolymers, and
   iv. optionally an antioxidant and/or other auxiliaries, in an amount from 0.1 to 10 parts by weight and preferably from 0.5 to 5 parts by weight per 100 parts by weight of block copolymers.
   v. optionally an antifoaming agent and/or a detergent in an amount of from 500 to 5000 ppm, relative to the weight of the composition,
   to an extruder,
b) blending and extruding the components in the extruder to obtain an extrudate,
c) pelletizing the extrudate with an underwater pelletizer to obtain wet pellets, and
d) drying the wet pellets to obtain pellets containing the adhesive composition and optionally treating the wet or dry pellets with a dusting agent in an amount of from 0.05 to 10% by weight of the total adhesive composition.

Tackifying resins are well known to those skilled in the art and a wide variety of different tackifying resins is available commercially. The tackifying resin to be used in the present invention might be hydrogenated or partially hydrogenated or non-hydrogenated hydrocarbon resin. The preferred resins are non-hydrogenated hydrocarbon resins or natural rosin resins.

The tackifying resin preferably has a softening point as determined by the Ring and Ball method (ASTM E28) in the range of from 70 to 130°C and more preferably 80 to 105°C.

The tackifying resin is present in an amount from 50 to 150 parts by weight (pbw) per 100 parts by weight of block copolymer. An adhesive composition containing less than 50 pbw will not have sufficient tack and a composition containing more than 150 pbw will be too tacky and will be difficult to coextrude. Preferably, the tackifying resin is present in an amount from 80 to 130 pbw, more preferably from 90 to 120 pbw, per 100 parts by weight of block copolymer.

The tackifying resins useful in the practice of this invention include hydrocarbon resins, synthetic polyterpenes, rosin esters and natural terpenes which are semi - solid or solid at ambient temperatures, and soften or become liquid at temperatures, ranging generally from 70° to 135°C, preferably from 85°C to 120°C.
Exemplary of the primary tackifying resins are compatible resins such as
(1) natural and modified rosins such as, for example, gum rosin, wood rosin, tall oil rosin, distilled rosin, hydrogenated rosin, dimerized rosin and polymerized rosin;
(2) glycerol and pentaerythritol esters of natural and modified rosins, such as, for example, the glycerol ester of pale, wood rosin, the glycerol ester of hydrogenated rosin, the glycerol ester of polymerized rosin, the pentaerythritol ester of hydrogenated rosin, ,and the phenolic-modified pentaerythritol ester of rosin;
(3) copolymers and terpolymers of natural terpenes, e.g. styrene/terpene and alphamethyl styrene/terpene;
(4) polyterpene resins having a softening point, as determined by ASTM method E28-58T, of from 80°C to 150°C, the latter polyterpene resins generally resulting from the polymerization of terpene hydrocarbons, such as the bicyclic monoterpene known as pinene, in the presence of Friedel-Crafts catalysts at moderately low temperatures;
(5) phenolic modified terpene resins and hydrogenated datives thereof such as, for example, the resin product resulting from the condensation, in an acid medium, of a bicyclic terpene and phenol;
(6) aliphatic petroleum hydrocarbon resins having a Ball And Ring softening point of from 70°C to 135°C, the latter resin resulting from the polymerization of monomers consisting primarily of olefins and diolefins; also included are the hydrogenated aliphatic petroleum hydrocarbon resins;
(7) aromatic petroleum hydrocarbon resins, and mixed aromatic and aliphatic petroleum hydrocarbon resins, and the hydrogenated derivatives thereof;
(8) aromatic modified alicyclic petroleum hydrocarbon resins and the hydrogenated derivatives thereof; and
(9) alicyclic petroleum hydrocarbon resins and the hydrogenated derivatives thereof.

The preferred tackifying resins for use in the practice of this invention are represented by those of the sub-paragraphs (6), (7), (8) and (9) supra, or mixtures thereof. Most preferred tackifying resins have been found to belong to the type of resins as specified in subparagraph 6. Examples of such resins are marketed under the tradename PICCOTAC, HERCULES MBG, HERCOTAC, WINGTACK and ESCOREZ , and in particular PICCOTAC 212 or 1094, and those resins marketed by EXXON under the tradename ESCOREZ 2000 series like ESCOREZ 2203 and those resins marketed by GOODYEAR under the tradename WINGTACK, like WINGTACK 95 and WINGTACK Extra. A preferred tackifying resin is PICCOTAC 212 or 1094, which actually consists of a modified aliphatic hydrocarbon resin.

Plasticisers are well known to those skilled in the art. Typically, the hardness of polymer compound is decreased by adding a plasticizer. The plasticizer is typically substantially compatible with at least the conjugated diene block(s) of the block copolymer.

Examples of plasticizers commonly used include oil, preferably naphtenic or paraffinic oil, more preferably paraffinic oil.

Examples of alternative plasticizers which may be used in the compound of the invention are, oligomers of randomly or sequentially polymerized styrene and conjugated diene, oligomers of conjugated diene, such as butadiene or isoprene, liquid polybutene-1, and ethylene-propylene-diene rubber, all having a weight average molecular weight in the range from 300 to 35,000, preferably from 300 to 25,000, more preferably from 500 to 10,000.

The adhesive composition may further comprise a poly(monovinyl aromatic block) compatible resin. Such resins are well known to those skilled in the art. Examples of suitable resins include coumarone-indene resin, polyindene resin, poly(methyl indene) resin, polystyrene resin, vinyltoluene-alphamethylstyrene resin, alphamethylstyrene resin and polyphenylene ether, in particular poly(2,6-dimethyl-1,4-phenylene ether). Poly(monovinyl aromatic hydrocarbon) compatible resins are e.g. sold under the tradenames HERCURES, ENDEX, KRISTALLEX, PICCOTEX, NORSOLENE, SYLVARES and NEVCHEM.

The adhesive composition preferably further comprises a dusting agent in an amount from 0.1 to 10% by weight, more preferably from 0.2 to 5% by weight, on basis of the total composition.

The dusting agent is a very fine powder having on average a particle size between 5 nm and 10 µm. By using a dusting agent, an adhesive composition which is free flowing can be obtained. As used herein the term "free flowing adhesive composition" refers to an adhesive composition of the present invention which contains a dusting agent and in which the particles of the composition do not adhere to one another. In principle any such fine powder may be employed but it is preferred that a polyolefin, such as polyethylene, silica, talc or calcium carbonate powder is used. Examples of commercially available silica powders include, but are not limited to, AEROSIL R972 (average particle size about 16 nm), AEROSIL 200 (average particle size about 12 nm, SIPERNAT, DUROSIL, DUREX and ULTRASIL (average particle size about 16 nm) (AEROSIL, SIPERNAT, DUREX and ULTRASIL are trademarks). Examples of commercially available calcium carbonate powders include, but are not limited to, DURCAL 5 (average particle size about 6 µm) and MILLICARB (average particle size about 3 µm) (DURCAL and MILLICARB are trademarks). The dusting agent is typically used in an amount of from 0.05 to 10% by weight, more preferably from 0.2 to 5% by weight, based on the total weight of the composition.

The adhesive composition may further comprise from 0 to 10 parts by weight of filler per 100 parts by weight of block copolymer. Examples of suitable fillers include silica and calcium carbonate.

In addition to the above mentioned components, the adhesive composition may contain one or more auxiliary components such as stabilisers, flame retardants, antiblocking agents and anti-slipping agents. These components are typically present in an amount from 0.1 to 10% by weight, preferably from 0.5 to 5% by weight, basis the total adhesive composition.

The present invention further relates to a process for preparing pellets containing the above adhesive composition. The process involves use of an extruder and an underwater pelletizer.

Extruders are well known to those skilled in the art and are available commercially. Preferably, the extruder is a twin-screw extruder, more preferably a co-rotating twin-screw extruder. Underwater pelletizers are well known to those skilled in the art and are available commercially. Other pelletizers such as face cutters and strand granulators have been found to be less suitable as use of face cutters and strand granulators do not result in uniform pellet size distributions. Furthermore, most of the adhesive compositions have the tendency to agglomerate in a face cutter or stick to the knives of a strand granulator, preventing easy production of these adhesive compositions in pellet form. In the process for producing pellets with an underwater pelletizer it has been found advantageous to add an antifoaming agent and a detergent to the pelletizer water to avoid agglomeration of the pellets.

The substrate layer to be used for the pressure sensitive adhesive tapes for cardboard box sealing is preferably an extrudable substrate layer. Examples include polyolefins such as polyethylene, polypropylene and copolymers of polyethylene and polypropylene.

The stabilizer and/or antioxidant used in the adhesive compositions of the present invention includes high molecular weight hindered phenol derivatives, high molecular weight hindered amine or triazine derivatives or phosphorous and/or sulphur containing hindered compounds, or mixtures thereof.

Preferred representatives of stabilizers and/or antioxidants are pentaerythrityl-tetrakis (3,5-di-tert-butyl-4-hydroxy-hydro-cinnamate (IRGANOX 1010): octadecyl ester of 3,5-bis (1,1-di-methylethyl)-4-hydroxy benzene propanoic acid (IRGANOX 1076; 2,4-bis (n-octylthio)-6-(4-hydroxy-3,5-di-tert-butylanilino)-1,3,5-triazine (IRGANOX 565); 2-tert-butyl-6-(3-tert-butyl-2'-hydroxy-5-methylbenzyl)-4-methylphenyl acrylate (SUMILIZER GM); tris (nonylphenyl)phosphate; tris (mixed mono- and di-phenyl)-phosphite; bis (2,4-di-tert-butylphenyl)pentaerythritol di phosphate (ULTRANOX 626); distearyl pentaerythritol dophosphite (WESTON 618);styrenated diphenylamine (NAUGARD 445); N-1,3-dimethylbutyl N'-phenyl-paraphenylenediamine (SUMILIZER 116 PPD); tris (2,4-di-tert-butylphenyl)phosphate (IRGAFOS 168); 4,4-butylidene-bis-(3-methyl-6-tert-butylphenol) (SUMILIZER BBMS); ore combinations thereof.

Most preferable are used combinations of tris(nonylphenyl)-phosphite (TNPP) and IRGANOX 1076, IRGANOX 565, IRGANOX 1010 or SUMILIZER GM (IRGANOX, SUMILIZER, ULTRANOX, NAUGARD, WESTON and IRGAFOS are trademarks.

The invention will be further illustrated by the following examples, however without restricting its scope to the embodiments.

### Example

Adhesive compositions according to the present invention and comparative compositions were prepared from S-I-S-I' tetrablock copolymers, the characterizing details of which have been listed hereafter:

**Table 1**

| Polymer | A | B | Comp i | Comp ii |
|---|---|---|---|---|
| Step I mol/kg S | 11,270 | 10,978 | 11,000 | 11,000 |
| Step II mol/kg SI | 182,400 | 136,300 | 115,000 | |
| Step III mol/kg SIS | 192,700 | 148,100 | 220,000 | 180,000 |
| Step IV mol/kg SISI' | 215,500 | 211,800 | | |
| PSC | 15,0 | 15,0 | 15,0 | 19.0 |
| diblock content (mol%) | 0 | 0 | 20 | 0 |

The abovementioned tetrablock copolymers A and B were prepared by full sequential polymerization of batches of substantially pure styrene, isoprene and styrene and isoprene respectively, by means of sec-butyl lithium as initiator and in cyclopentane as solvent.

The abovementioned triblock copolymers SIS comp (i) and comp (ii) were prepared by full sequential polymerization of batches of substantially pure styrene and isoprene, initiated by sec-butyl lithium in cyclohexane as solvent, or by coupling the living SI'diblocks by means of dibromoethane and termination of the remaining triblock copolymers with water.

Pressure sensitive adhesive compositions a and b and comp. i and comp. ii were prepared from components as listed in table 2. The components were dissolved in toluene and applied at 22g/m2 on MYLAR film.

The relevant properties of them have been listed in table 3.

**Table 2**

| Composition (parts by weight) | a | b | comp i | comp ii |
|---|---|---|---|---|
| Amounts of blockcopol A | 100 | | | |
| Amounts of blockcopol B | | 100 | | |
| Amounts of blockcopol (i) | | | 100 | |
| Amounts of blockcopol (ii) | | | | 100 |
| (MBG?) | | | | |
| PICCOTAC 212 | 110 | 110 | 110 | 110 |
| EDELEX 956 | 10 | 10 | 10 | 10 |
| IRGANOX 1010 | 2 | 2 | 2 | 2 |

**Table 3**

| Composition | a | b | comp i | comp ii |
|---|---|---|---|---|
| HMV 190°C Pas | 33 | 43 | 57 | 65 |
| Flaptest Kraft 0.5 kg minutes | >4300 | >4300 | 1950 | 3600 |
| HP 40°Cl kg Kraft minutes | 160 | 80 | 30 | 120 |
| RBT-cm | 6 | 11 | 7 | 9 |

It will be appreciated from the test results that the compositions comprising the tetrablock copolymers slow better packaging properties with lower hot-melt viscosity than those compositions comprising conventional triblock copolymers and/or triblock/diblock copolymers.

## Claims

1. A packaging tape adhesive composition for cardboard box sealing tapes, comprising:
- a linear tetrablock copolymer S-I-S-I', obtainable by full sequential polymerization of predominantly styrene and of predominantly isoprene respectively, having an apparent molecular weight in the range of from 205,000 to 225,000 and preferably from 210,000 to 217,000, and wherein both predominantly poly(styrene) blocks have an apparent molecular weight of from 10,000 to 12,000 and preferably from 10,000 to 11,800, wherein the intermediate S-I diblock copolymer has an apparent molecular weight in the range of from 130,000 to 185,000, and preferably from 135,000 to 184,000; wherein the intermediate S-I-S triblock copolymer has an apparent molecular weight in the range of from 145,000 to 195,000 and preferably from 147,000 to 193,000, wherein the poly(styrene) content is in the range of from 14 to 16 wt%,
- at least one tackifying resin in an amount of from 50 to 150 parts by weight, and preferably between 90 and 120 parts by weight per 100 parts by weight of block copolymers,
- optionally a naphtenic oil or paraffinic oil in an amount of from 0 to 50 parts by weight and preferably from 5 to 20 parts by weight per 100 parts by weight of block copolymers, and
- optionally an antioxidant and/or other auxiliaries, in an amount from 0.1 to 10 parts by weight and preferably from 0.5 to 5 parts by weight per 100 parts by weight of block copolymer.

2. Packaging tape adhesive compositions for cardboard box sealing tapes according to claim 1, wherein the block copolymer is composed of substantially pure poly(styrene) homopolymer blocks and of substantially pure poly(isoprene) homopolymer blocks.

3. Packaging tape adhesive composition according to claims 1 and 2, wherein the molecular weight of the block I is significantly greater than that one of I'.

4. Packaging tape adhesive composition according to any one of claims 1 to 3, wherein the styrene content os from 14.5 to 15.5 wt% and more is preferably about 15.0 wt%.

5. Packaging tape adhesive composition according to any one of claims 1 to 4, wherein the apparent molecular weight of the complete tetrablock copolymer is in the range of from 210,000 to 216,000.

6. Packaging tape adhesive composition according to any one of claims 1 to 5, wherein the tetrablock comprises predominantly poly(isoprene) blocks I, having a molecular weight of from 124,000 to 175,000 and more preferably from 125,000 to 172,000, as calculated from the apparent molecular weights measured after the first and second consecutive polymerization steps.

7. Packaging tape adhesive composition according to any one of claims 1 to 6, wherein the tetrablock copolymers comprise terminal predominantly poly(isoprene) blocks I', having a molecular weight of from 20,000 to 65,000 and most preferably from 22,000 to 64,000, as calculated from the apparent molecular weight measured after the consecutive third and fourth polymerization steps.

8. Packaging tapes for cardboard sealing comprising an adhesive composition according to any one of claims 1-7.

9. Linear tetrablock copolymers S-I-S-I' for the manufacture of packaging tape adhesive compositions for cardboard box sealing, obtainable by full sequential polymerization of predominantly styrene and of predominantly isoprene respectively, having an apparent molecular weight in the range of from 205,000 to 225,00 and preferably from 210,000 to 217,000, and wherein both predominantly poly(styrene) blocks have an apparent molecular weight of from 10,000 to 12,000 and preferably from 10.000 to 11,800, wherein the intermediate S-I diblock copolymer has an apparent molecular weight in the range of from 130,000 to 185,000, and preferably from 135,000 to 184,000; wherein the intermediate S-I-S triblock copolymer has an apparent molecular weight in the range of from 145,000 to 195,000 and preferably from 147,000 to 193,000, wherein the poly(styrene) content is in the range of from 14 to 16 wt%.

10. Linear tetrablock copolymers according to claim 9, wherein the molecular weight of the block I is significantly greater than that one of I'.

11. Linear tetrablock copolymers according to claims 9 and 10, wherein the styrene content is from 14.5 to 15.5 wt% and more preferably about 15.0 wt%.

12. Linear tetrablock copolymers according to any one of claims 9 to 11, wherein the apparent molecular weight of the complete tetrablock copolymer is in the range of from 210,000 to 216,000.

13. Linear tetrablock copolymers according to any one of claims 9 to 12, wherein the tetrablock comprises predominantly poly(isoprene) blocks I, having a molecular weight of from 124,000 to 175,000 and more preferably from 125,000 to 172,000, as calculated from the apparent molecular weights measured after the first and second consecutive polymerization steps.

14. Process for the manufacture of pellets, comprising an adhesive composition for packaging tapes for sealing cardboard boxes comprising:
b) adding
i. a linear tetrablock copolymer, obtainable by full sequential polymerization of substantially pure styrene and of substantially pure isoprene respectively, having an apparent molecular weight in the range of from 210,000 to 217,000, and wherein both substantially pure poly(styrene) blocks have an apparent molecular weight of from 10,000 to 10,800, wherein the intermediate S-I diblock copolymer has an apparent molecular weight in the range of from 135,000 to 184,000; wherein the intermediate S-I-S triblock copolymer has an apparent molecular weight in the range of from 147,000 to 193,000; wherein the poly(styrene) content is in the range of from 14 to 16 wt%,
ii. at least one tackifying resin in an amount of from 50 to 150 parts by weight and preferably from 90 to 120 parts by weight per 100 parts by weight of block copolymers,
iii. optionally a naphtenic oil or paraffinic oil in an amount of from 0 to 50 parts by weight and preferably from 5 to 20 parts by weight per 100 parts by weight of block copolymers, and
iv. optionally an antioxidant and/or other auxiliaries, in an amount from 0.1 to 10 parts by weight and preferably from 0.5 to 5 parts by weight per 100 parts by weight of block copolymers.
v. optionally an antifoaming agent and/or a detergent in an amount of from 500 to 5000 ppm, relative to the weight of the composition,
to an extruder,
e) blending and extruding the components in the extruder to obtain an extrudate,
f) pelletizing the extrudate with an underwater pelletizer to obtain wet pellets, and
g) drying the wet pellets to obtain pellets containing the adhesive composition and optionally treating the wet or dry pellets with a dusting agent in an amount of from 0.05 to 10% by weight of the total adhesive composition.
